# FASCICULE DE BREVET EUROPEEN

(11) **EP 3 834 600 B1**
(45) Date de publication et mention de la délivrance du brevet: **10.05.2023**
(21) Numéro de dépôt: 20208136.0
(22) Date de dépôt: 17.11.2020
(51) Int. Cl.: A01D 46/26

(54) **TÊTE DE PEIGNE À PEIGNE DOUBLE VIBRANT ET OUTIL DE RÉCOLTE POURVU D'UNE TELLE TÊTE DE PEIGNE**
KAMMKOPF MIT EINEM DOPPELTEN VIBRIERENDEN KAMM, UND MIT EINEM SOLCHEN KAMMKOPF AUSGESTATTETES ERNTEWERKZEUG
RAKE HEAD WITH DOUBLE VIBRATING RAKE AND HARVESTING TOOL PROVIDED WITH SUCH A RAKE HEAD

(30) Priorité: 09.12.2019 FR 1913938
(43) Date de publication de la demande: 16.06.2021
(73) Titulaire: PELLENC, 84120 Pertuis (FR)
(72) Inventeur: ROLLAND, Christian, 84160 CUCURON (FR)
(74) Mandataire: Weber, Etienne Nicolas

(56) Documents cités:
- EP-A1- 3 504 957
- EP-A2- 2 138 028
- CN-U- 203 313 693
- GR-B- 1 008 857

## Description

### Domaine technique

La présente invention concerne une tête de peigne à peigne double vibrant et un outil de récolte pourvu d'une telle tête de peigne.

Les outils de récolte à peignes vibrants concernés par l'invention sont principalement des outils tenus à la main et utilisés pour secouer les branches des arbres et arbustes de manière à en faire tomber les fruits, pour leur récolte. Ainsi les outils de récolte présentent usuellement une perche à l'extrémité de laquelle se trouve la tête de peigne, de manière à atteindre les fruits en hauteur ou à distance des mains de l'utilisateur.

Un ou plusieurs peignes de la tête de peigne permettent de s'insérer dans les branches des arbres et de leur appliquer des secousses vibratoires ou un battage afin d'en faire tomber les fruits.

L'outil de l'invention peut être mis en oeuvre notamment pour la récolte de baies, de fruits à noyaux, tels que des prunes ou des amandes, ou d'autres drupes, telles que des olives, du café et de la pistache, par exemple. Il trouve son application principalement dans les domaines de la pruniculture et de l'oléiculture.

### Etat de la technique antérieure

Une illustration de l'état de la technique peut être donnée par les documents suivants :
US 3 651 627
FR 2 327 719
EP 0 427 170
EP 0 974 257
EP 1 116 432
EP 1 175 832
EP 2 015 629
FR 2 909 517
EP 1 943 895
EP 2 138 028
WO 2011/026204

Le document GR 1 008 857 décrit un dispositif de récolte pour la cueillette de fruits comprenant deux peignes susceptibles de se déplacer de manière synchrone.

Les peignes vibrants connus comportent une ou plusieurs rangées de doigts, ou tiges, agencés selon un ou plusieurs plans de peigne. Un moteur, généralement un moteur électrique, est couplé aux peignes de la tête de peigne par l'intermédiaire d'une transmission à excentrique, actionnant une ou plusieurs bielles, et permettant de transformer le mouvement rotatif du moteur en un mouvement pivotant périodique du ou des peignes.

Le mouvement pivotant du peigne transmet, par réaction, des vibrations à l'ensemble de l'outil et notamment aux poignées de l'outil par lequel un utilisateur saisit l'outil. Les vibrations se trouvent accentuées par le fait que la tête de peigne, qui porte le ou les peignes vibrants, se trouve à l'extrémité d'une perche qui agit à l'instar d'un bras de levier.

Une composante importante des vibrations générées perpendiculairement à l'axe de la perche rend alors l'usage de l'outil de récolte peu confortable et particulièrement fatiguant pour des durées d'utilisation prolongées.

Pour réduire l'amplitude des vibrations transmises à l'utilisateur de l'outil, un certain nombre de documents suggèrent d'utiliser des têtes de peigne à peignes doubles. Ces têtes de peigne font appel à deux peignes dont les mouvements présentent des composantes antagonistes. Les composantes antagonistes du mouvement tendent à réduire les masses en mouvement dans le même sens et tendent à compenser, au moins partiellement les vibrations transmises aux poignées de l'outil de récolte.

Un tel outil est décrit, par exemple, dans le document EP 2 138 028 précité. Un mécanisme à excentrique de type bielle-manivelle transmet le mouvement rotatif d'un moteur à deux peignes disposés côte à côte.

### Exposé de l'invention

La présente invention part du constat que les vibrations résiduelles générées par les peignes doubles connus restent importantes, et que les outils de récolte qui en sont pourvus manquent de confort pour une utilisation prolongée.

Aussi, un but de l'invention est de proposer une tête de peigne à peigne double et un outil de récolte dont les vibrations résiduelles sont plus faibles.

Pour atteindre ces buts, l'invention propose d'améliorer le synchronisme du mouvement antagoniste des peignes, de limiter les vibrations induites par la masse des corps en mouvement dans la tête de peigne et de limiter la largeur de la tête de peigne pour une pénétration plus aisée dans la végétation.

Aussi, l'invention propose plus précisément une tête de peigne à peigne double vibrant comprenant :
- un premier peigne oscillant et un deuxième peigne oscillant, à mouvements antagonistes, reçus à pivotement sur au moins un pivot d'oscillation,
- un arbre moteur pour l'entrainement des premier et deuxième peignes oscillants, et
- une transmission de peigne reliant l'arbre moteur au premier et au deuxième peignes, la transmission de peigne comprenant une première bielle et une deuxième bielle, la première bielle et la deuxième bielle étant reliées respectivement à un premier pivot d'actionnement et à un deuxième pivot d'actionnement respectivement du premier peigne et du deuxième peigne, le premier pivot d'actionnement et le deuxième pivot d'actionnement étant décalés par rapport au pivot d'oscillation,
et dans laquelle :
- la transmission de peigne comprend un premier excentrique et un deuxième excentrique, le deuxième excentrique étant lié en rotation avec le premier excentrique, le premier excentrique et le deuxième excentrique étant reliés au premier pivot d'actionnement et au deuxième pivot d'actionnement respectivement par la première bielle et la deuxième bielle,
- la première bielle et la deuxième bielle présentent respectivement une première longueur et une deuxième longueur, la deuxième longueur étant différente de la première longueur.

Les peignes sont dits oscillants lorsqu'ils effectuent des mouvements pivotants périodiques sur un angle de pivotement limité et donc inférieur à un tour complet. La plage de pivotement angulaire des peignes peut être comprise par exemple entre 5 et 45 degrés d'angle. Le pivotement des peignes a lieu autour de pivots d'oscillation.

Les mouvements des peignes sont dits antagonistes lorsque le sens de pivotement des deux peignes est opposé l'un à l'autre. En d'autres termes, lorsque les peignes sont en mouvement, les doigts des deux peignes de la tête de peigne ont tendance à s'écarter ou à se rapprocher de manière simultanée d'un plan médiateur de la tête de peigne, parallèle aux axes de pivot. Le plan médiateur est également parallèle à l'axe de perche d'une perche d'un outil pourvu de la tête de peigne. Le caractère antagoniste du mouvement s'entend à d'éventuelles erreurs de déphasage près.

La transmission de peigne est une transmission à excentriques. Elle comprend un premier et un deuxième excentrique. En particulier le premier excentrique et le deuxième excentrique peuvent comporter des manivelles dont un maneton est associé respectivement à chacune des bielles. Ainsi l'une des extrémités de chaque bielle est reliée à un maneton d'une manivelle tandis que l'extrémité opposée de la bielle est reliée à un pivot d'actionnement.

L'utilisation d'excentriques à cames ou à pivots excentrés est également possible. On considère que les deux excentriques sont liés en rotation lorsque la rotation de l'un des excentriques entraine la rotation de l'autre excentrique. De préférence la liaison en rotation peut être telle que la vitesse de rotation des deux excentriques est identique.

Chaque excentrique est associé à l'un des peignes. De préférence les axes de rotation des manivelles et des manetons, de même que les axes des pivots d'actionnement et des pivots d'oscillation peuvent être tous parallèles les uns aux autres et parallèles au plan médiateur de la tête de peigne.

La première bielle et la deuxième bielle ont pour fonction de transmettre le mouvement des excentriques aux peignes. La jonction des bielles et des excentriques peut être une jonction de type bielle-manivelle, les bielles étant montées sur les manetons des manivelles. L'autre extrémité des bielles est reçue sur les pivots d'actionnement qui permettent de faire pivoter les peignes. Les pivots d'actionnement peuvent être directement montés sur les peignes. Selon une autre possibilité les pivots d'actionnement peuvent également être montés sur des manivelles, désignées par manivelles de peigne. Les manivelles de peigne sont alors articulées sur les pivots d'oscillation des peignes, et solidaires en pivotement des peignes. On entend par pivot d'oscillation un pivot autour duquel un peigne peut effectuer son mouvement oscillant.

De manière avantageuse, et comme indiqué précédemment, la première bielle et la deuxième bielle ont des longueurs différentes. Un rapport entre la première longueur de bielle (b1) et la deuxième longueur de bielle (b2) peut être supérieur à 1,5 et de préférence supérieur à 2.

La caractéristique de bielles de longueur différente permet d'éviter l'agencement côte à côte des excentriques. L'un des excentriques, associé à la bielle plus longue peut être décalé parallèlement au plan médiateur de la tête de peigne, de manière à l'éloigner des peignes. Or comme les excentriques sont décalés parallèlement au plan médiateur de la tête de peigne, il est possible également de les rapprocher de ce plan, et ainsi de rapprocher les masses en mouvement, et notamment les bielles du plan médiateur. En particulier la distance séparant l'axe des excentriques du plan médiateur peut être inférieure au rayon des excentriques. Cette construction permet de limiter les vibrations induites par la masse des corps en mouvement de la tête de peigne mais également d'augmenter la compacité de la tête de peigne, assurant ainsi une pénétration plus aisée de la tête de peigne dans le feuillage.

Selon une réalisation préférée de la tête de peigne, le premier excentrique et le deuxième excentrique peuvent être contrarotatifs. Dans ce cas, le premier et le deuxième peigne sont montés respectivement sur un premier pivot d'oscillation et sur un deuxième pivot d'oscillation distinct du premier pivot d'oscillation.

Selon un autre mode de réalisation, constituant une variante, le premier et le deuxième excentrique peuvent être liés en rotation dans un même sens de rotation. Dans ce cas, le premier peigne et le deuxième peigne peuvent être montés sur un pivot d'oscillation commun, tandis que le premier pivot d'actionnement et le deuxième pivot d'actionnement sont situés de part et d'autre d'un plan contenant le pivot d'oscillation commun et l'axe de perche d'une perche d'un outil équipé de la tête de peigne.

Une valeur d'excentrique du premier excentrique peut être choisie égale à une valeur d'excentrique du deuxième excentrique. Dans ce cas une distance séparant le premier pivot d'actionnement et le premier pivot d'oscillation du premier peigne est égale à une distance séparant le deuxième pivot d'actionnement et le deuxième pivot d'oscillation du deuxième peigne. Cette construction symétrique permet d'équilibrer les forces d'actionnement. La valeur d'excentrique est comprise comme l'ampleur de l'excentricité radiale. Dans le cas d'un excentrique sous la forme d'une manivelle, la valeur d'excentrique correspond à la distance séparant l'axe de rotation de la manivelle et l'axe du maneton de la manivelle.

Selon un mode de réalisation préféré de la tête de peigne, le premier et le deuxième excentrique peuvent comporter respectivement une première roue dentée et une deuxième roue dentée, respectivement pourvues de manetons. Chaque roue dentée constitue ainsi une manivelle, associée à une bielle.

En outre, et de préférence, la première roue dentée et la deuxième roue dentée peuvent présenter des diamètres primitifs égaux et les roues dentées peuvent engrener mutuellement. Grâce à cette caractéristique le mouvement de rotation de la première roue dentée peut être transmis directement à la deuxième roue dentée tout en garantissant la synchronisation des roues dentées et leur rotation en sens inverse.

Par ailleurs, l'une des roues dentées peut engrener avec un pignon de l'arbre moteur. Le pignon de l'arbre moteur peut éventuellement constituer le pignon de sortie d'un réducteur associé à un moteur électrique d'un outil pourvu de la tête de peigne. L'arbre moteur de la tête de peigne peut également être en prise directe avec un moteur électrique ou constituer l'arbre de ce moteur. Grâce à un tel agencement, le mouvement de rotation du moteur peut être transmis aux excentriques par un train d'engrenages. Il convient de préciser qu'une transmission par courroie ou par chaine n'est pas exclue, bien que moins souhaitable notamment pour des raisons d'encombrement et de poids.

Selon une réalisation particulière de la tête de peigne, la première roue dentée et la deuxième roue dentée peuvent présenter respectivement un premier axe de rotation et un deuxième axe de rotation, une première distance d'axe de rotation (d1) et une deuxième distance d'axe de rotation (d2) séparant respectivement le premier axe de rotation et le deuxième axe de rotation d'un plan médiateur de la tête de peigne. Dans ce cas, la somme (d1+d2) de la première distance d'axe de rotation et de la deuxième distance d'axe de rotation peut être choisie inférieure au diamètre primitif des roues dentées. Cette caractéristique, avantageuse, permise par la longueur différente des deux bielles, traduit le rapprochement des excentriques, et en particulier des roues dentées du plan médiateur de la tête de peigne. Une réalisation plus compacte de la tête de peigne peut ainsi être envisagée notamment pour favoriser sa pénétration dans la végétation. De plus, les masses en mouvement de la tête de peigne, et en particulier les excentriques et les bielles, peuvent être rapprochés du plan médiateur de la tête de peigne pour limiter les couples d'efforts radiaux engendrant des vibrations.

Un agencement particulier de la première roue dentée et de la deuxième roue dentée peut être retenu dans lequel le produit (b1 *d1) de la première longueur de bielle (b1) et de la première distance d'axe de rotation (d1) est sensiblement égale au produit (b2*d2) de la deuxième longueur de bielle (b2) et de la deuxième distance d'axe de rotation (d2). Cet agencement peut également être étendu par équivalence à des excentriques qui ne sont pas des roues dentées.

Selon cet agencement, particulier, la roue dentée ou l'excentrique associé à la bielle la plus longue se trouve plus près du plan médiateur. Un tel agencement est prévu pour minimiser les vibrations et l'encombrement de la tête de peigne. La proximité au plan médiateur se trouve en outre en proportion avec la longueur relative des bielles.

La première bielle et la deuxième bielle peuvent présenter de préférence des libertés de mouvement dans des plans de mouvement parallèles voire coplanaires. L'agencement et le mouvement des deux bielles dans un même plan de mouvement, perpendiculaire aux axes de rotation des excentriques, et en particulier perpendiculaire aux axes de rotation des roues dentées, favorise la réalisation d'une tête de peigne particulièrement compacte, en limitant aussi les couples d'efforts à l'origine des vibrations.

Par ailleurs, la première bielle et la deuxième bielle peuvent être des bielles plates avec des faces principales parallèles respectivement aux plans de mouvement. Cette configuration participe également à la compacité de la tête de peigne.

Il convient de noter que le premier peigne et le deuxième peigne peuvent être coplanaires. Par ailleurs, le premier peigne et le deuxième peigne peuvent être disposés à égale distance du plan médiateur de la tête de peigne.

La compacité de la tête de peigne, autorisée par les dispositions précitées, ainsi que la coplanarité des peignes, contribue également à la réduction des vibrations.

L'invention concerne également un outil de récolte comprenant une poignée de commande, une perche, et une tête de peigne telle que décrite précédemment, la perche reliant la tête de peigne à la poignée de commande. Un utilisateur peut saisir l'outil par la poignée de commande et éventuellement par la perche ou une deuxième poignée, de manière à le tenir à deux mains.

On entend par poignée de commande une poignée pourvue d'une interface de commande, par exemple une gâchette, permettant de commander le mouvement de la tête de peigne.

L'outil peut comporter également un moteur choisi parmi un moteur électrique et un moteur thermique et couplé à l'arbre moteur de la tête de peigne.

Dans ce cas la poignée de commande peut comporter un régulateur de la vitesse de rotation du moteur électrique, ou plus simplement un interrupteur de mise sous tension. Lorsque le moteur est un moteur thermique, la poignée de commande peut comporter une gâchette agissant sur l'admission du moteur.

Le moteur peut être logé dans la poignée et pourvu d'une transmission traversant la perche et reliant le moteur à l'arbre moteur de la tête de peigne.

Selon une autre possibilité, préférée, le moteur peut être un moteur électrique faisant partie de la tête de peigne. Le moteur peut en particulier être logé dans la tête de peigne, ou être monté sur la tête de peigne.

D'autres caractéristiques et avantages de l'invention ressortiront de la description qui suit en référence aux figures de dessins. Cette description est donnée à titre illustratif et non limitatif. Elle concerne des modes de mise en oeuvre particuliers de l'invention.

### Brève description des figures

La figure 1 montre un outil de récolte pourvu d'une tête de peigne conforme à l'invention.
La figure 2 montre une vue en perspective et en éclaté de l'extrémité de l'outil de récolte de la figure 1.
La figure 3 montre l'intérieur d'une tête de peigne conforme à l'invention, dont on a retiré un capot de protection. La figure 3 est une vue partielle de la tête de peigne
Les figures 4, 5, 6, 7, 8 et 9 montrent à plus petite échelle une tête de peigne conforme aux figures 2 et 3, illustrant plusieurs positions particulières de peignes de récolte et des organes de la tête de peigne.
La figure 10 est un diagramme de phase comparatif d'une tête de peigne conforme à l'invention et une tête de peigne de l'état de la technique.

Les figures sont représentées en échelle libre.

### Description détaillée de modes de mise en oeuvre de l'invention

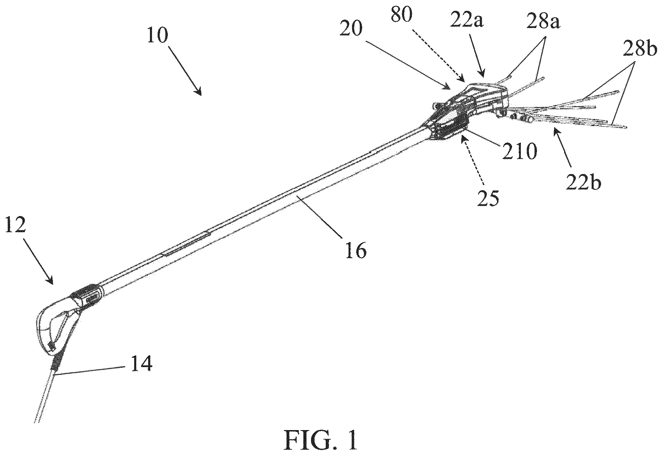

La figure 1 montre un outil de récolte 10 comprenant une poignée 12, une perche 16, et une tête de peigne 20, conforme à l'invention. La perche 16 peut être une perche de longueur fixe ou télescopique.

La tête de peigne 20 de la figure 1 est équipée d'un moteur électrique 25 à l'intérieur d'un carter de moteur 210 de la tête de peigne fixé à la perche. Le moteur électrique est alimenté en énergie par des conducteurs traversant le manche télescopique 16 et reliant le moteur électrique à une interface de commande non représentée de la poignée de commande. L'interface de commande est associée à une alimentation électrique pour alimenter le moteur électrique.

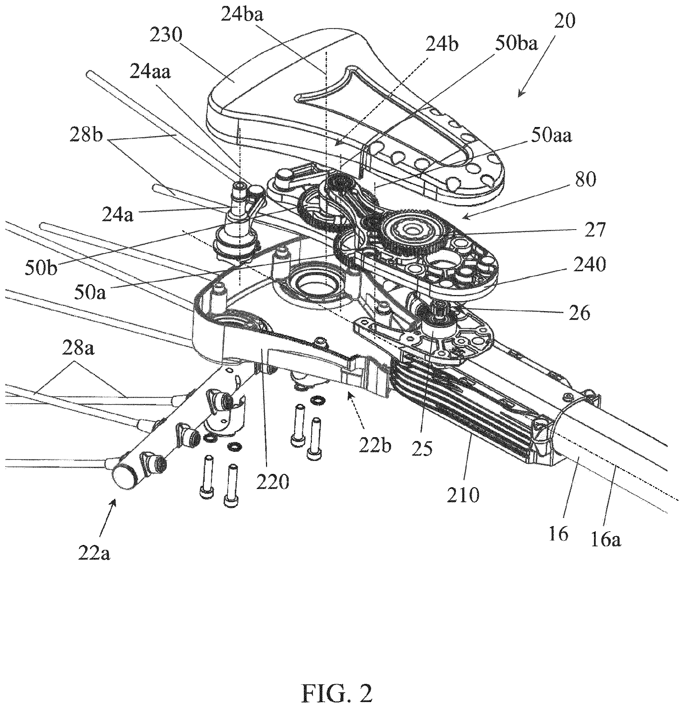

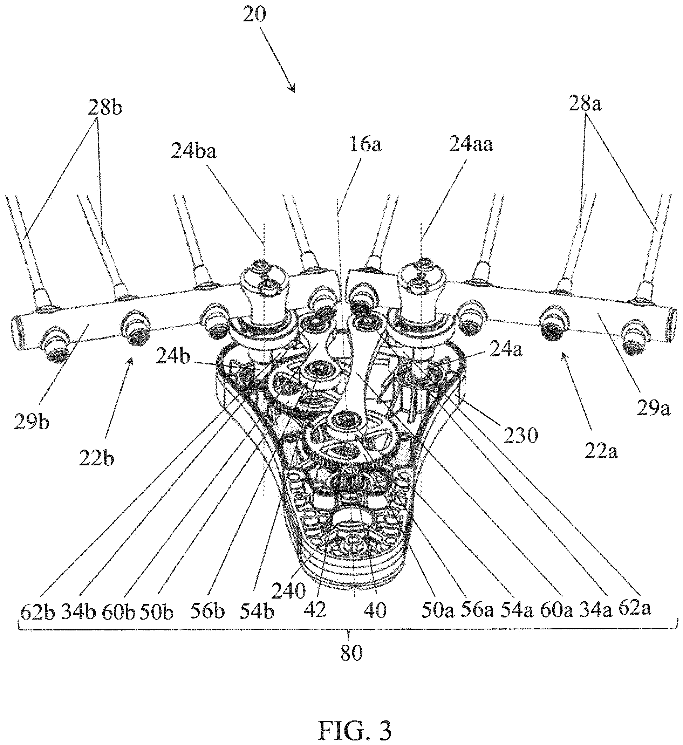

Comme le montre la figure 2, le moteur 25 est associé à un engrenage réducteur 26, 27 entrainant un arbre moteur d'une transmission de peigne 80 assemblée sur une platine de transmission 240 de la tête de peigne. L'arbre moteur n'est pas visible sur la figure 2. Il est indiqué sur la figure 3, décrite plus loin, avec la référence 40. L'arbre moteur constitue l'arbre de sortie de l'engrenage réducteur 26, 27 associé au moteur 25.

Selon une autre possibilité, un moteur peut également être intégré dans la poignée 12. Dans ce cas, il est relié à l'arbre moteur de la tête de peigne par une transmission de perche traversant la perche 16 et reliée à l'arbre moteur 40 de la transmission de peigne 80.

La poignée 12 est pourvue d'un cordon d'alimentation électrique 14 reliant l'interface de commande du moteur électrique 25. Le cordon 14, représenté partiellement, est susceptible d'être relié à une source d'alimentation en énergie, telle qu'une batterie portée au dos ou à la ceinture d'un utilisateur, voire posée au sol par exemple. Le cordon peut être aussi configuré pour être relié directement au réseau électrique.

La tête de peigne 20 comprend deux peignes 22a, 22b pourvus chacun d'une pluralité de doigts 28a, 28b susceptibles d'être engagés dans la végétation d'un arbre ou d'un arbuste dont on veut récolter les fruits. Les deux peignes sont reliés au moteur électrique 25 par l'intermédiaire de la transmission de peigne 80 et de l'engrenage réducteur 26, 27.

La tête de peigne comprend encore un carter 220 support de peigne et un capot 230 de protection. Ils sont reliés entre eux par vissage en insérant la platine de transmission 240 et le carter de moteur 210. L'ensemble de ces pièces 210, 220, 230 et 240 peut ainsi enfermer les pièces mobiles de la transmission de peigne et les protéger efficacement de débris, voire d'humidité, susceptibles de perturber leur bon fonctionnement.

La figure 3, montre, à plus grande échelle, la tête de peigne 20 dont on a retiré le carter de moteur et le carter support de peigne.

On distingue les deux peignes 22a, 22b montés respectivement sur des pivots d'oscillation 24a, 24b, s'étendant selon des axes 24aa, 24ba. Les peignes 22a, 22b comportent chacun un bras support 29a, 29b portant une pluralité de doigts 28a, 28b.

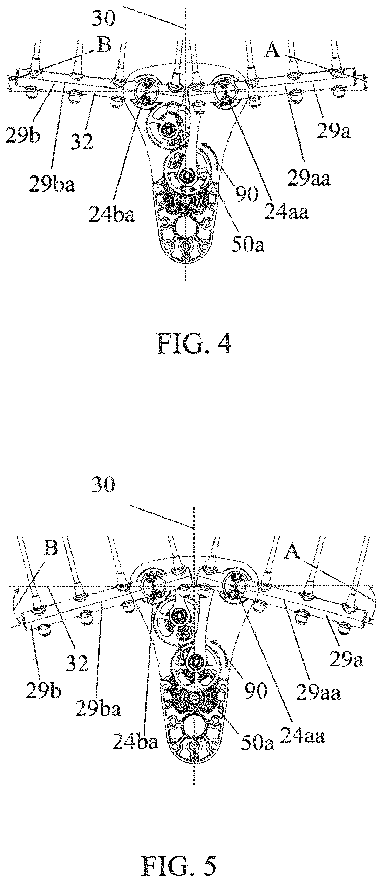

Les peignes 22a, 22b sont disposés en une extrémité de la tête de peigne 20, de manière sensiblement symétrique par rapport à un plan médiateur 30 de la tête de peigne. Le plan médiateur 30 est visible plus particulièrement sur les figures en plan 4 à 9. Le plan médiateur est un plan parallèle aux axes 24aa et 24ba des pivots d'oscillation, situé à égale distance de ces derniers et parallèle à l'axe de perche 16a visible dans les figures 2 et 3. Les axes 24aa, 24ba des pivots d'oscillation 24a, 24b des peignes 22a, 22b sont situés sur un même plan perpendiculaire au plan médiateur 30 de la tête de peigne. Le plan contenant les axes des pivots d'oscillation est désigné par « plan des pivots d'oscillation » dans la suite de la description et est repéré avec la référence 32 sur les figures 4 à 9. Chaque pivot d'oscillation est en liaison avec le carter 220 support de peigne et le capot 230 de protection par l'intermédiaire de roulements à billes.

Les peignes 22a, 22b sont également pourvus de pivots d'actionnement 34a, 34b destinés à communiquer aux peignes 22a, 22b leur mouvement oscillant autour des pivots d'oscillation 24a, 24b.

Dans l'exemple de réalisation illustré par la figure 3, on peut observer que les pivots d'actionnement 34a, 34b ne sont pas directement montés sur les bras support 29a, 29b des peignes 22a, 22b portant les doigts 28a, 28b. Les pivots d'actionnement 34a, 34b constituent les manetons de manivelles de peigne 62a, 62b. Les manivelles de peigne 62a, 62b sont montées sur les pivots d'oscillation 24a, 24b avec les peignes 22a, 22b et sont rigidement solidaires en pivotement avec les peignes 22a, 22b autour des axes 24aa, 24ba des pivots d'oscillation 24a, 24b. Ainsi un mouvement d'oscillation peut être communiqué aux peignes 22a, 22b par l'intermédiaire des pivots d'actionnement 34a, 34b et des manivelles de peigne 62a, 62b. Les manivelles de peigne 62a, 62b s'étendent de manière sensiblement parallèle aux bras support des peignes 22a, 22b. Cette construction permet avantageusement de protéger l'ensemble des pièces mobiles de la transmission de peigne de débris, voire d'humidité extérieure à la tête de peigne. Les extrémités des pivots d'oscillation comportant la fixation des peignes et les peignes sont dans ce cas les seules pièces mobiles de la tête de peigne en contact avec la végétation à récolter.

Il convient de préciser que, selon une variante de réalisation, les pivots d'actionnement peuvent aussi être montés directement sur les peignes, et en particulier sur les bras support des peignes.

Le mouvement oscillant est assuré à l'aide de la transmission de peigne 80 reliant l'arbre moteur 40 mentionné précédemment aux peignes 22a, 22b. La transmission de peigne transforme un mouvement de rotation de l'arbre moteur en un mouvement oscillant des peignes. Un pignon 42 de l'arbre moteur 40 engrène sur une première roue dentée 50a. La première roue dentée présente un premier axe de rotation 50aa disposé à une première distance d'axe de rotation (d1) du plan médiateur 30.

La première roue dentée 50a comprend un premier maneton 54a, dont l'axe, décalé par rapport au premier axe de rotation 50aa, forme un premier excentrique 56a sous la forme d'une manivelle. La valeur d'excentrique, ou excentricité radiale est égale à la distance séparant l'axe du premier maneton, de l'axe de rotation 50aa de la première roue dentée 50a.

Une première bielle 60a relie le premier excentrique 56a et plus précisément le premier maneton 54a de la première roue dentée 50a au pivot d'actionnement 34a du premier peigne 22a. Une première extrémité de la bielle forme une articulation sur le maneton, tandis qu'une deuxième extrémité de la bielle, opposée à la première extrémité forme une articulation sur le pivot d'actionnement 34a.

Ainsi une rotation de la première roue dentée provoque un pivotement alternatif du premier peigne.

La première roue dentée engrène avec une deuxième roue dentée 50b présentant un diamètre primitif égal à celui de la première roue dentée 50a. Ainsi la rotation de la première roue dentée entraine une rotation synchrone de la deuxième roue dentée 50b. La deuxième roue dentée tourne en sens inverse de la première roue dentée à la même vitesse de rotation que la première roue dentée.

La deuxième roue dentée 50b présente un deuxième axe de rotation 50ba disposé à une deuxième distance d2 du plan médiateur 30 et sur un côté opposé du plan médiateur, par rapport à l'axe de rotation 50aa de la première roue dentée 50a. La deuxième distance d2 séparant le deuxième axe de rotation 50ba du plan médiateur 30 est plus grande que la première distance (d1) séparant l'axe de rotation de la première roue dentée 50a du même plan médiateur 30.

Par ailleurs, l'axe de rotation 50ba de la deuxième roue dentée 50b se trouve être plus près du plan des pivots d'oscillation 32 que l'axe de rotation 50aa de la première roue dentée 50a.

Tout comme la première roue dentée 50a, la deuxième roue dentée 50b comprend un deuxième maneton 54b. Son axe, décalé par rapport au deuxième axe de rotation 50ba, forme un deuxième excentrique 56b. Le deuxième excentrique prend également la forme d'une manivelle. La valeur d'excentrique, ou excentricité radiale est égale à la distance séparant l'axe du deuxième maneton, de l'axe de rotation 50ba de la deuxième roue dentée 50b.

Dans l'exemple de mise en oeuvre illustré par la figure 3 le premier excentrique 56a et le deuxième excentrique 56b présentent la même valeur d'excentrique. Par ailleurs, la distance séparant l'axe du pivot d'actionnement 34a, 34b et l'axe du pivot d'oscillation 24a, 24b est également la même pour les deux peignes 22a, 22b.

Il est possible, d'utiliser des excentriques de valeur différente pour les deux excentriques et de les conjuguer à des peignes dont la distance entre pivot d'actionnement et pivot d'oscillation est inversement proportionnelle aux valeurs d'excentrique, pour arriver à un résultat comparable.

Une deuxième bielle 60b relie le deuxième excentrique 56a et donc le deuxième maneton 54b de la deuxième roue dentée 50b au pivot d'actionnement 34b du deuxième peigne 22b. Le montage de la deuxième bielle est comparable à celui de la première bielle.

La deuxième bielle 60b est plus courte que la première bielle 60a. Ceci compense le fait que la deuxième roue dentée 50b est plus proche du plan 32 des pivots d'oscillation que la première roue dentée 50a.

La première bielle, plus longue, et donc plus lourde, se meut plus près du plan médiateur que la deuxième bielle, plus légère. Cette disposition permet d'équilibrer la tête en termes de masses ainsi que la contribution des bielles aux vibrations.

Les bielles, de forme plate, présentent une liberté de mouvement sensiblement dans le même plan. Le plan du mouvement des bielles (non référencé) est perpendiculaire à la fois au plan médiateur 30 et au plan 32 des pivots d'oscillation. Il est également perpendiculaire aux axes 24aa, 24ba des pivots d'oscillation 24a, 24b et aux axes des pivots d'actionnement 34a, 34b. Les bielles 64a,64b, de forme aplatie, sont sensiblement coplanaires et s'étendent parallèlement au plan de mouvement précité.

Comme mentionné précédemment, lorsque l'arbre moteur 42 est en rotation la première roue dentée 50a et la deuxième roue dentée 50b sont entrainées en rotation en sens inverse. Les peignes, couplés aux pivots d'oscillation 24a, 24b, effectuent des mouvements oscillants périodiques, également en sens inverse et de façon synchrone du fait de l'identité des diamètres primitifs des deux roues dentées 50a,50b. Ainsi les doigts 28a et 28b du premier et du deuxième peigne 22a, 22b se rapprochent du plan médiateur sur une demi-alternance et s'éloignent du plan médiateur sur une deuxième demi-alternance au cours d'une rotation complète des roues dentées.

Le mouvement des deux peignes 22a, 22b est sensiblement symétrique de part et d'autre du plan médiateur. Le caractère essentiellement symétrique permet d'annuler plus ou moins la quantité de mouvement globale des peignes et de minimiser ainsi les vibrations engendrées dans la tête de peigne 20 dans la direction perpendiculaire à l'axe de la perche 16, et transmises vers la poignée le long de la perche.

Il convient de préciser cependant que le mouvement du premier peigne 22a et le mouvement du deuxième peigne 22b n'est pas rigoureusement symétrique. En effet, de très légers déphasages angulaires apparaissent au cours d'une période complète d'oscillation, correspondant à une révolution des roues dentées 50a, 50b. Ce déphasage est essentiellement dû à l'absence d'une symétrie des pièces mobiles de la transmission de peigne 80 par rapport au plan médiateur. Cette absence de symétrie permet toutefois de limiter l'encombrement de la tête de peigne de part et d'autre de ce plan médiateur de façon à favoriser sa pénétration dans la végétation.

Les figures 4 à 9, décrites ci-après, montrent la tête de peignes 20 des figures 2 et 3 avec des positions singulières des peignes et des roues dentées pour illustrer ce phénomène. Chaque figure montre un positionnement angulaire A, B du bras support de peigne 22a, 22b entre l'axe longitudinal 22aa, 22ba du bras support et le plan médiateur. Le déphasage considéré des peignes est alors exprimé par la différence des valeurs absolues A et B en degré d'angle. La flèche 90 indique le sens de rotation de la roue dentée 50a.

La figure 4 montre la position des peignes lorsque les manetons des deux roues dentées sont les plus éloignés du plan 32 des pivots d'oscillation. Le déphasage du deuxième peigne 22b est alors dans l'exemple donné de +0,3 degrés d'angle par rapport au premier peigne 22a. La position angulaire des peignes est mesurée par rapport au plan médiateur 30.

La figure 5 montre la position des peignes lorsque les manetons des deux roues dentées sont les plus proches du plan 32 des pivots d'oscillation. Le déphasage du deuxième peigne 22b est alors de -0,61 degrés d'angle par rapport au premier peigne 22a.

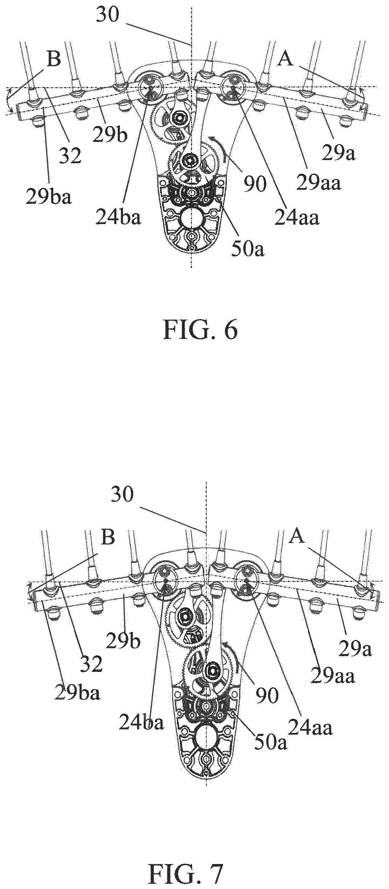

La figure 6 montre une position des peignes à déphasage nul. Dans ce cas la première roue dentée présente une position angulaire de 38,5 degrés d'angle. On considère que la première roue dentée présente une position angulaire de 38,5 degrés d'angle lorsqu'une droite passant par l'axe du maneton de la première roue dentée 50a et l'axe de rotation de la première roue dentée forme, avec le plan médiateur 30 un angle de 38,5 degrés d'angle.

La figure 7 montre une deuxième position des peignes à déphasage nul. Cette position correspond à une position angulaire de 268 degrés d'angle de la première roue dentée.

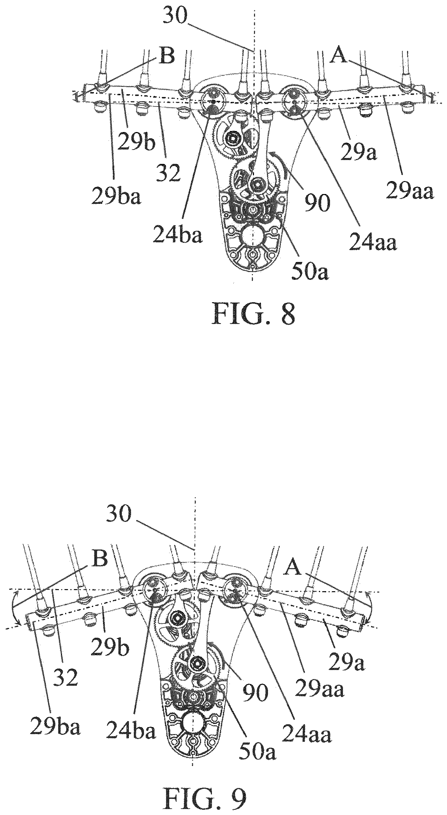

La figure 8 montre une position des peignes avec un premier maximum de déphasage positif à +0,72 degrés d'angle. Elle correspond à une position angulaire de la première roue dentée de 235 degrés d'angle.

La figure 9 montre une position des peignes avec un autre maximum de déphasage, négatif, à -0,77 degrés d'angle. Elle correspond à une position angulaire de la première roue dentée de 335 degrés d'angle.

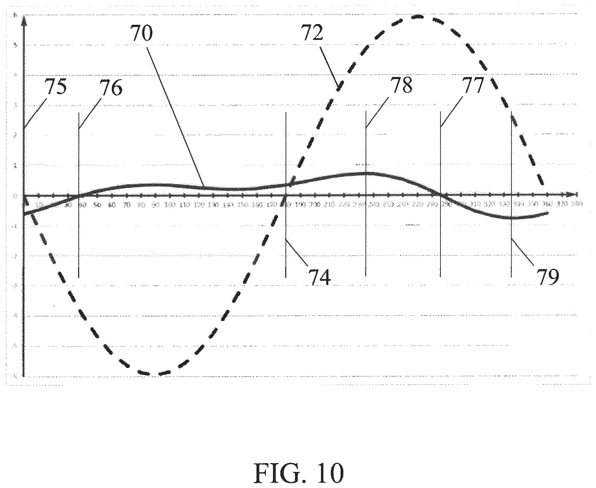

Une courbe 70 de la figure 10 montre l'évolution du déphasage des peignes, indiqué en ordonnée et en degrés d'angle. L'évolution du déphasage est fonction de la position angulaire de l'un des excentriques, en l'occurrence celui de la première roue dentée 50a. La position angulaire de la première roue dentée est indiquée en abscisse et exprimée en degrés d'angle également. La rotation de l'excentrique est couverte sur 360 degrés d'angle, c'est-à-dire sur un tour complet de la roue dentée, sachant que les déphasages se reproduisent à l'identique à chaque tour. La courbe 70 montre que le déphasage reste circonscrit à moins de 1 degrés d'angle en valeur absolue, de part et d'autre de la position de déphasage nulle. Les références 74, 75, 76, 77, 78 et 79 indiquent les abscisses de la courbe 70 relatives aux figures respectives 4 à 9.

A titre de comparaison, la courbe 72 de la figure 10 indique le déphasage des peignes d'une tête de peigne de type connu dans laquelle les deux peignes sont actionnés par un seul et même excentrique. On note que le déphasage est bien plus important et peut atteindre ±6 degrés d'angle.

Comme le déphasage des peignes de la tête de peigne 20 de l'invention est plus faible, la compensation des mouvements réciproque est meilleure. Les vibrations générées dans la tête de peigne, et transmises à l'utilisateur de l'outil par l'intermédiaire de la poignée et de la perche sont dont également réduites.

## Revendications

1. Tête de peigne (20) à peigne double vibrant comprenant :
- un premier peigne oscillant (22a) et un deuxième peigne oscillant (22b), à mouvements antagonistes, reçus à pivotement sur au moins un pivot d'oscillation (24a, 24b),
- un arbre moteur (40) pour l'entrainement des premier et deuxième peignes oscillants (22a, 22b), et
- une transmission de peigne (80) reliant l'arbre moteur au premier et au deuxième peignes, la transmission de peigne (80) comprenant une première bielle (60a) et une deuxième bielle (60b), la première bielle et la deuxième bielle étant reliées respectivement à un premier pivot d'actionnement (34a) et à un deuxième pivot d'actionnement (34b) respectivement du premier peigne (22a) et du deuxième peigne (22b), le premier pivot d'actionnement et le deuxième pivot d'actionnement étant décalés par rapport au pivot d'oscillation (24a, 24b),
et dans laquelle :
- la transmission de peigne (80) comprend un premier excentrique (56a) et un deuxième excentrique (56b), le deuxième excentrique étant lié en rotation avec le premier excentrique, le premier excentrique et le deuxième excentrique étant reliés au premier pivot d'actionnement (34a) et au deuxième pivot d'actionnement (34b) respectivement par la première bielle (60a) et la deuxième bielle (60b),
**caractérisée en ce que**
la première bielle (60a) et la deuxième bielle (60b) présentent respectivement une première longueur et une deuxième longueur, la deuxième longueur étant différente de la première longueur.

2. Tête de peigne (20) selon la revendication 1, dans laquelle le premier excentrique (56a) et le deuxième excentrique (56b) sont contrarotatifs, et dans laquelle le premier et le deuxième peigne (22a, 22b) sont montés respectivement sur un premier pivot d'oscillation (24a) et sur un deuxième pivot d'oscillation (24b) distinct du premier pivot d'oscillation.

3. Tête de peigne (20) selon l'une quelconque des revendications précédentes, dans laquelle une valeur d'excentrique du premier excentrique (56a) est égale à une valeur d'excentrique du deuxième excentrique (56b) et dans laquelle une distance séparant le premier pivot d'actionnement (34a) et le pivot d'oscillation (24a) du premier peigne (22a) est égale à une distance séparant le deuxième pivot d'actionnement (34b) et le pivot d'oscillation (24b) du deuxième peigne (22b).

4. Tête de peigne (20) selon l'une quelconque des revendications précédentes, dans laquelle le premier et le deuxième excentrique (56a, 56b) comportent respectivement une première roue dentée (50a) et une deuxième roue dentée (50b) respectivement pourvues de manetons (54a, 54b).

5. Tête de peigne (20) selon la revendication 4, dans laquelle la première roue dentée (50a) et la deuxième roue dentée (50b) présentent des diamètres primitifs égaux et engrènent mutuellement.

6. Tête de peigne (20) selon la revendication 5, dans lequel l'une des roues dentées (50a, 50b) engrène avec un pignon (42) de l'arbre moteur (40).

7. Tête de peigne (20) selon l'une quelconque des revendications 5 ou 6, dans laquelle la première roue dentée (50a) et la deuxième roue dentée (50b) présentent respectivement un premier axe de rotation (50aa) et un deuxième axe de rotation (50ba), une première distance d'axe de rotation et une deuxième distance d'axe de rotation séparant respectivement le premier axe de rotation (50aa) et le deuxième axe de rotation (50ba) d'un plan médiateur (30) de la tête de peigne (20), la somme de la première distance d'axe de rotation et de la deuxième distance d'axe de rotation étant inférieure au diamètre primitif des roues dentées.

8. Tête de peigne (20) selon la revendication 7, dans lequel le produit de la première longueur de bielle et de la première distance d'axe de rotation est sensiblement égale au produit de la deuxième longueur de bielle et de la deuxième distance d'axe de rotation.

9. Tête de peigne (20) selon l'une quelconque des revendications précédentes, dans lequel un rapport entre la première longueur de bielle et la deuxième longueur de bielle est supérieur à 1,5 et de préférence supérieur à 2.

10. Tête de peigne (20) selon l'une quelconque des revendications précédentes, dans laquelle la première bielle (60a) et la deuxième bielle (60b) présentent des libertés de mouvement dans des plans de mouvement parallèles.

11. Tête de peigne (20) selon l'une quelconque des revendications précédentes, dans laquelle la première bielle (60a) et la deuxième bielle (60b) sont des bielles plates avec des faces principales parallèles respectivement aux plans de mouvement.

12. Tête de peigne (20) selon l'une quelconque des revendications précédentes, dans lequel le premier peigne (22a) et le deuxième peigne (22b) sont coplanaires.

13. Outil de récolte (10) comprenant une poignée de commande (12), une perche (16), et une tête de peigne (20) selon l'une quelconque des revendications précédentes, la perche (16) reliant la tête de peigne (20) à la poignée de commande (12).

14. Outil de récolte (10) selon la revendication 13, comprenant un moteur (25) choisi parmi un moteur électrique et un moteur thermique couplé à l'arbre moteur (40) de la tête de peigne (20).

## Patentansprüche

1. Kammkopf (20) mit einem Doppelvibrationskamm, umfassend:
- einen ersten Schwingkamm (22a) und einen zweiten Schwingkamm (22b) mit gegenläufigen Bewegungen, die um mindestens einen Schwingungszapfen (24a, 24b) schwenkbar aufgenommen sind,
- eine Motorwelle (40) zum Antreiben des ersten und des zweiten Schwingkamms (22a, 22b), und
- ein Kammgetriebe (80), das die Motorwelle mit dem ersten und mit dem zweiten Schwingkamm verbindet, wobei das Kammgetriebe (80) ein erstes Pleuel (60a) und ein zweites Pleuel (60b) umfasst, wobei das erste Pleuel und das zweite Pleuel jeweils mit einem ersten Betätigungszapfen (34a) und einem zweiten Betätigungszapfen (34b) jeweils des ersten Kamms (22a) und des zweiten Kamms (22b) verbunden sind, wobei der erste Betätigungszapfen und der zweite Betätigungszapfen in Bezug auf den Schwingungszapfen (24a, 24b) versetzt sind,
und wobei:
- das Kammgetriebe (80) einen ersten Exzenter (56a) und einen zweiten Exzenter (56b) umfasst, wobei der zweite Exzenter drehfest mit dem ersten Exzenter verbunden ist, wobei der erste Exzenter und der zweite Exzenter mit dem ersten Betätigungszapfen (34a) und dem zweiten Betätigungszapfen (34b) jeweils durch das erste Pleuel (60a) und das zweite Pleuel (60b) verbunden sind,
**dadurch gekennzeichnet, dass**
das erste Pleuel (60a) und das zweite Pleuel (60b) jeweils eine erste Länge und eine zweite Länge aufweisen, wobei die zweite Länge von der ersten Länge verschieden ist.

2. Kammkopf (20) nach Anspruch 1, wobei der erste Exzenter (56a) und der zweite Exzenter (56b) sich gegenläufig drehen, und wobei der erste und der zweite Kamm (22a, 22b) jeweils an einem ersten Schwingungszapfen (24a) und an einem zweiten Schwingungszapfen (24b), der von dem ersten Schwingungszapfen verschieden ist, montiert sind.

3. Kammkopf (20) nach einem der vorhergehenden Ansprüche, wobei ein Exzenterwert des ersten Exzenters (56a) gleich einem Exzenterwert des zweiten Exzenters (56b) ist und wobei ein Abstand, der den ersten Betätigungszapfen (34a) und den Schwingungszapfen (24a) von dem ersten Kamm (22a) trennt, gleich einem Abstand ist, der den zweiten Betätigungszapfen (34b) und den Schwingungszapfen (24b) des zweiten Kamms (22b) trennt.

4. Kammkopf (20) nach einem der vorhergehenden Ansprüche, wobei der erste und der zweite Exzenter (56a, 56b) jeweils ein erstes Zahnrad (50a) und ein zweites Zahnrad (50b) umfassen, die jeweils mit Kurbelzapfen (54a, 54b) versehen sind.

5. Kammkopf (20) nach Anspruch 4, wobei das erste Zahnrad (50a) und das zweite Zahnrad (50b) gleiche Teilkreisdurchmesser aufweisen und miteinander kämmen.

6. Kammkopf (20) nach Anspruch 5, wobei eines der Zahnräder (50a, 50b) mit einem Ritzel (42) der Motorwelle (40) kämmt.

7. Kammkopf (20) nach einem der Ansprüche 5 oder 6, wobei das erste Zahnrad (50a) und das zweite Zahnrad (50b) jeweils eine erste Drehachse (50aa) und eine zweite Drehachse (50ba) aufweisen, wobei ein erster Abstand der Drehachse und ein zweiter Abstand der Drehachse die jeweils die erste Drehachse (50aa) und die zweite Drehachse (50ba) von einer Mittelebene (30) des Kammkopfes (20) trennen, wobei die Summe des ersten Abstands der Drehachse und des zweiten Abstands der Drehachse kleiner ist als der Teilkreisdurchmesser der Zahnräder.

8. Kammkopf (20) nach Anspruch 7, wobei das Produkt der ersten Pleuellänge und des ersten Abstand der Drehachse im Wesentlichen gleich dem Produkt der zweiten Pleuellänge und des zweiten Abstands der Drehachse ist.

9. Kammkopf (20) nach einem der vorhergehenden Ansprüche, wobei ein Verhältnis zwischen der ersten Pleuellänge und der zweiten Pleuellänge größer als 1,5 und vorzugsweise größer als 2 ist.

10. Kammkopf (20) nach einem der vorhergehenden Ansprüche, wobei das erste Pleuel (60a) und das zweite Pleuel (60b) Bewegungsfreiheiten in parallelen Bewegungsebenen aufweisen.

11. Kammkopf (20) nach einem der vorhergehenden Ansprüche, wobei das erste Pleuel (60a) und das zweite Pleuel (60b) flache Pleuel sind, deren Hauptflächen jeweils parallel zu den Bewegungsebenen verlaufen.

12. Kammkopf (20) nach einem der vorhergehenden Ansprüche, wobei der erste Kamm (22a) und der zweite Kamm (22b) koplanar sind.

13. Erntewerkzeug (10), umfassend einen Bedienungsgriff (12), eine Stange (16) und einen Kammkopf (20) nach einem der vorhergehenden Ansprüche, wobei die Stange (16) den Kammkopf (20) mit dem Bedienungsgriff (12) verbindet.

14. Erntewerkzeug (10) nach Anspruch 13, umfassend einen Motor (25), der aus einem Elektromotor und einem mit der Motorwelle (40) des Kammkopfes (20) gekoppelten Verbrennungsmotor ausgewählt ist.

## Claims

1. A comb head (20) with double vibrating comb comprising:
- a first oscillating comb (22a) and a second oscillating comb (22b), with opposing movements, pivotally received on at least one oscillation pivot (24a, 24b),
- a motor shaft (40) for driving the first and second oscillating combs (22a, 22b), and
- a comb transmission (80) connecting the motor shaft to the first and to the second combs, the comb transmission (80) comprising a first connecting rod (60a) and a second connecting rod (60b), the first connecting rod and the second connecting rod being connected respectively to a first actuation pivot (34a) and to a second actuation pivot (34b) respectively of the first comb (22a) and of the second comb (22b), the first actuation pivot and the second actuation pivot being offset with respect to the oscillation pivot (24a, 24b),
and wherein:
- the comb transmission (80) comprises a first eccentric (56a) and a second eccentric (56b), the second eccentric being rotationally connected to the first eccentric, the first eccentric and the second eccentric being connected to the first actuation pivot (34a) and to the second actuation pivot (34b) respectively by the first connecting rod (60a) and the second connecting rod (60b),
**characterised in that**
the first connecting rod (60a) and the second connecting rod (60b) respectively have a first length and a second length, the second length being different from the first length.

2. The comb head (20) according to claim 1, wherein the first eccentric (56a) and the second eccentric (56b) are counter-rotating, and wherein the first and the second comb (22a, 22b) are respectively mounted on a first oscillation pivot (24a) and on a second oscillation pivot (24b) separate from the first oscillation pivot.

3. The comb head (20) according to any one of the preceding claims, wherein an eccentric value of the first eccentric (56a) is equal to an eccentric value of the second eccentric (56b) and wherein a distance separating the first actuation pivot (34a) and the oscillation pivot (24a) of the first comb (22a) is equal to a distance separating the second actuation pivot (34b) and the oscillation pivot (24b) of the second comb (22b).

4. The comb head (20) according to any one of the preceding claims, wherein the first and the second eccentric (56a, 56b) respectively include a first toothed wheel (50a) and a second toothed wheel (50b) respectively provided with crankpins (54a, 54b).

5. The comb head (20) according to claim 4, wherein the first toothed wheel (50a) and the second toothed wheel (50b) have equal pitch diameters and mesh with each other.

6. The comb head (20) according to claim 5, wherein one of the toothed wheels (50a, 50b) meshes with a pinion (42) of the motor shaft (40).

7. The comb head (20) according to any one of claims 5 or 6, wherein the first toothed wheel (50a) and the second toothed wheel (50b) respectively have a first axis of rotation (50aa) and a second axis of rotation (50ba), a first axis of rotation distance and a second axis of rotation distance respectively separating the first axis of rotation (50aa) and the second axis of rotation (50ba) from a mediator plane (30) of the comb head (20), the sum of the first axis of rotation distance and the second axis of rotation distance being less than the pitch diameter of the toothed wheels.

8. The comb head (20) according to claim 7, wherein the product of the first connecting rod length and the first axis of rotation distance is substantially equal to the product of the second connecting rod length and the second axis of rotation distance.

9. The comb head (20) according to any one of the preceding claims, wherein a ratio between the first connecting rod length and the second connecting rod length is greater than 1.5 and preferably greater than 2.

10. The comb head (20) according to any one of the preceding claims, wherein the first connecting rod (60a) and the second connecting rod (60b) have freedoms of movement in parallel planes of movement.

11. The comb head (20) according to any one of the preceding claims, wherein the first connecting rod (60a) and the second connecting rod (60b) are flat connecting rods with main faces parallel respectively to the planes of movement.

12. The comb head (20) according to any one of the preceding claims, wherein the first comb (22a) and the second comb (22b) are coplanar.

13. A harvesting tool (10) comprising a control handle (12), a pole (16), and a comb head (20) according to any one of the preceding claims, the pole (16) connecting the comb head (20) to the control handle (12).

14. The harvesting tool (10) according to claim 13, comprising a motor (25) selected from an electric motor and a heat engine coupled to the motor shaft (40) of the comb head (20).
